# FASCICULE DE BREVET EUROPEEN

(11) **EP 1 181 198 B1**
(45) Date de publication et mention de la délivrance du brevet: **19.02.2003**
(21) Numéro de dépôt: 00938876.0
(22) Date de dépôt: 31.05.2000
(51) Int. Cl.: B65D 1/26, B29C 49/04, B29C 69/00

(54) **PROCEDE D'OBTENTION D'UN EMBALLAGE THERMO-PLASTIQUE EN FORME DE BOITE**
VERFAHREN ZUR HERSTELLUNG VON SCHACHTELFÖRMIGEN VERPACKUNGSBEHÄLTERN AUS THERMOPLASTISCHEN KUNSTSTOFFEN
METHOD FOR THE PRODUCTION OF THERMOPLASTIC PACKAGING IN THE FORM OF A BOX

(30) Priorité: 02.06.1999 FR 9907161
(43) Date de publication de la demande: 27.02.2002
(73) Titulaire: MR Industries, 42000 Saint-Chamond (FR)
(72) Inventeur: COLCOMBET, Thierry, F-69450 Saint-Cyr au Mont d'Or (FR)
(74) Mandataire: Maureau, Philippe
(86) Numéro de dépôt international: FR0001515
(87) Numéro de publication internationale: WO00075022

(56) Documents cités:
- EP-A- 0 279 547
- US-A- 5 685 478
- US-A- 5 816 484

## Description

La présente invention concerne de manière générale l'emballage de tout objet, avec une feuille d'un matériau thermo-plastique.

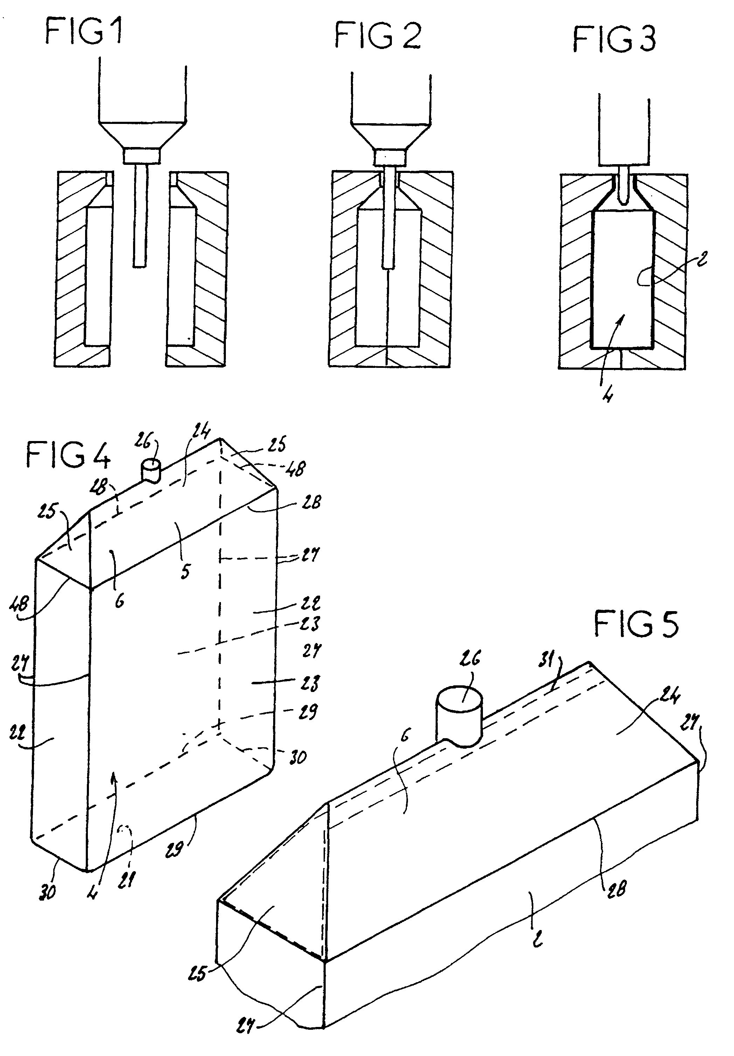

Conformément au brevet européen N° 0 279 547, on décrit un procédé d'obtention d'un emballage thermo-plastique en forme de boîte, plus particulièrement représenté à la figure 1, et comprenant, de manière monobloc, un corps dont la paroi a une forte épaisseur, et une bouche dont la paroi a une faible épaisseur; on se réfèrera plus particulièrement à la représentation de la figure 4.

Selon le procédé utilisé, à partir d'un matériau thermo-plastique à l'état fluide, on forme par moulage, c'est-à-dire extrusion-soufflage, un corps creux correspondant à l'emballage selon figure 1, et ceci grâce à une filière d'extrusion, dont l'entrefer peut être réglé en épaisseur. On obtient ainsi, à l'envers, une ébauche ou corps creux comportant d'un seul tenant, la paroi correspondant à la bouche, et la paroi correspondant au corps de l'emballage.

Aucun façonnage postérieur de la bouche n'est effectué, de manière à obtenir un moyen de fermeture de l'emballage.

Conformément à la figure 2 du brevet américain N° 5 685 478, on obtient de manière traditionnelle, c'est-à-dire par thermo-formage, un emballage comportant, outre le corps creux formant boîte avec une bouche transversale, quatre rabats, dont deux sont en deux parties, et dont les deux autres sont en une seule partie, mais agencés pour s'assembler l'un sur l'autre vers les éléments complémentaires.

Les parties des deux premiers rabats servent à obturer la bouche du corps de boîte, tandis que les parties restantes, une fois rassemblées servent de poignées.

Selon ce document, les rabats décrits précédemment sont obtenus par thermo-formage, avec une découpe correspondant aux formes retenues.

La présente invention a pour objet d'obtenir un emballage du type "blister", avec une technique beaucoup plus simple que la solution traditionnelle consistant à thermo-former une feuille d'un matériau thermo-plastique, puis à pelliplaquer la feuille ainsi thermo-formée, avec l'objet à emballer ou suremballer, sur un support plat, par exemple une feuille de carton.

Conformément à la présente invention, la paroi dans laquelle sont formés de manière monobloc, et la boîte et la partie supérieure, est de faible épaisseur, par exemple de 0,4 mm, pour être à la fois suffisamment souple pour être déformée, sans contrainte importante, et suffisamment rigide pour résister à des chocs, par exemple de manipulation, tandis que le corps creux formé pendant l'étape de moulage-soufflage comporte une partie supérieure qui obture la bouche de la boite et comprend deux rabats et deux pièces triangulaires de liaison de ces rabats et, éventuellement, la queue de soufflage, les deux rabats et les pièces triangulaires étant reliés à la paroi de la boite par des lignes de pliage, alors que les rabats sont reliés entre eux par une ligne de pliage supérieure, et que cette étape b) est suivie, par une étape de façonnage du corps creux au cours de laquelle les deux rabats sont formés dans la partie supérieure polyèdrique, dune part, par réalisation, au niveau de leur pli supérieur, d'une bande découpée, comprenant la queue de soufflage si elle est présente, et, d'autre part, séparés des pièces triangulaires par découpe de ces pièces entraînant leur séparation du corps creux.

Un emballage ou suremballage thermo-plastique selon l'invention peut donc être utilisé en lieu et place de tout emballage connu par la pratique sous le terme de "blister".

Comme on le sait, aujourd'hui les objets emballés sous "blister" sont obtenus par :
- thermo-formage d'une coque, par exemple une barquette, à partir d'une feuille d'un matériau thermo-plastique, à la fois souple et rigide, comme défini précédemment,
- mise en place de l'objet dans la coque ainsi obtenue,
- et la fermeture de la coque, au moyen d'un film ou pellicule, plastique ou métallique, thermo-soudé ou pclliplaqué le long de la bordure de la coque.

Un tel mode d'emballage ou suremballage s'avère compliqué, et donc cher à mettre en oeuvre, puisque requérant de nombreuses opérations, dont certaines peuvent être manuelles.

La présente invention apporte donc un nouveau mode d'emballage, rompant avec la technique traditionnelle telle que précédemment définie, plus simple à mettre en oeuvre, tout en préservant les fonctions traditionnelles d'un emballage ou suremballage du type "blister".

Avec un procédé selon l'invention, il devient donc possible d'obtenir un emballage du type "blister", pratiquement en une seule ou deux opérations.

La présente invention est maintenant décrite préférentiellement par référence aux dessins annexés, dans lesquels :
- les figures 1 à 3 représentent respectivement trois étapes d'un procédé de moulage d'un matériau thermo-plastique, par extrusion-soufflage;
- la figure 4 représente une vue en perspective d'un corps creux, tel qu'obtenu à l'issue de l'opération de moulage ;
- la figure 5 représente ce même corps creux, avec des lignes en pointillés, définissant les zones à reprendre et façonner, par exemple par découpe ;
- la figure 6 représente en perspective la partie supérieure du corps creux en forme de boîte, obtenu après façonnage ou reprise ;
- la figure 7 représente en perspective la partie supérieure de l'emballage thermo-plastique, en forme de boîte, une fois obturé, et fermé ;
- la figure 8 représente, en perspective un ensemble comprenant, d'une part un emballage tel que représenté à la figure 7, la boîte étant fermée, et d'autre part un objet contenu et enfermé à l'intérieur de la boîte ; cet ensemble est représenté dans sa position d'utilisation, c'est-à-dire suspendu à un présentoir de présentation ;
- la figure 9 represente en coupe transversale un moyen particulier de liaison entre les deux rabats d'une boite telle que représentée aux figures 6 à 8.

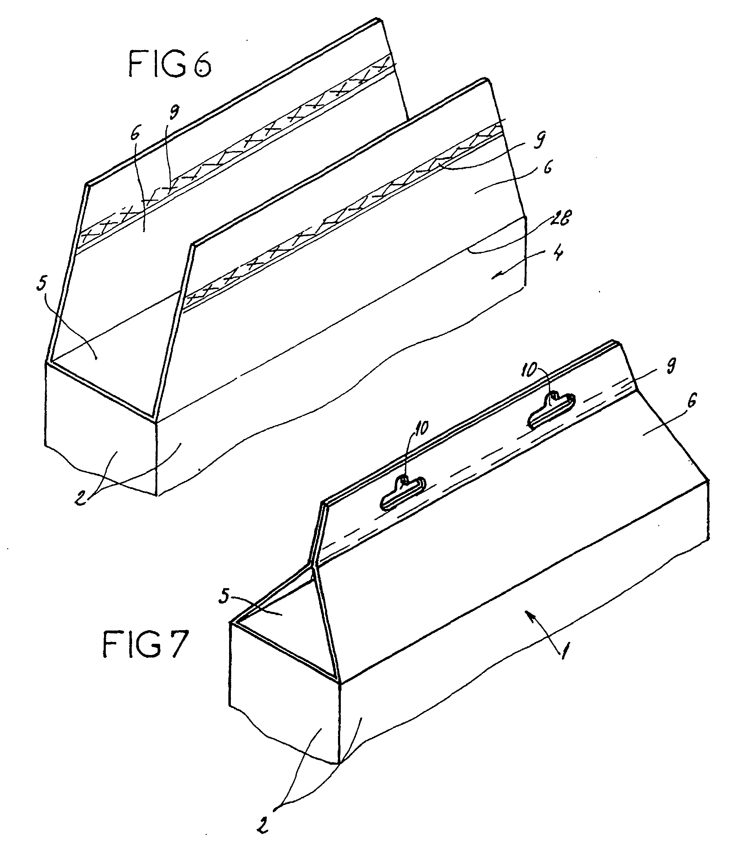

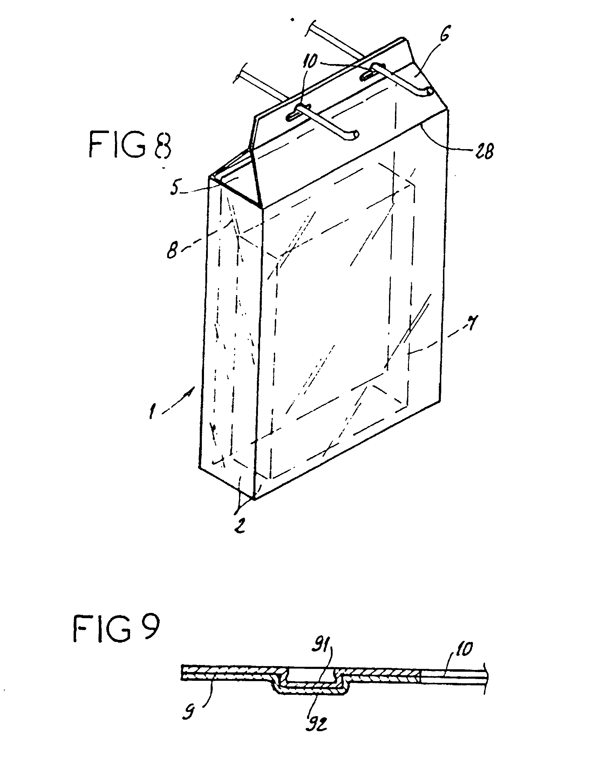

Pour l'essentiel. un emballage 1 thermo-plastique en forme de boîte, est obtenu selon la présente invention par les opérations suivantes :
a) on dispose tout d'abord d'un matériau thermo-plastique, par exemple polypropylene, apte à former sous forme de feuille de faible épaisseur, par exemple de 0,4 mm, une paroi 2 à la fois suffisamment souple pour être déformée sans contrainte importante, et suffisamment rigide pour résister à des chocs, par exemple de manipulation ; préférentiellement, le matériau thermo-plastique retenu, mélangé si nécessaire avec des additifs appropriés, est transparent une fois formé et solide, c'est-à-dire en feuille sous faible épaisseur.
b) à partir du matériau thermo-plastique précité, à l'état fluide, on forme par moulage un corps creux 4 comportant d'un seul tenant, c'est-à-dire de manière monobloc une paroi 2 dans laquelle sont formés, d'une part plusieurs flancs 22, 23, et un fond 21, séparés par des plis 27, 29, 30, déterminant ensemble un volume en forme de boîte avec une bouche 5, et d'autre part au moins deux rabats 6 intégrés dans la paroi 2, séparés du reste de cette dernière par des plis 28, disposés en vis-à-vis et de part et d'autre de la bouche 5 ;
c) éventuellement, comme montré à la figure 5, on reprend et façonne le corps creux 4 obtenu, au moins pour découper et séparer au moins les rabats 6 du reste de la paroi 2 ;
   moyennant quoi, à l'issue de ces étapes, uprés solidification du matériau thermo-plastique, on obtient la boite recherchée, ayant une structure monobloc, à la fois rigide et souple, et comportant la bouche 5 transversale pour l'introduction d'un objet 7 (cf. figure 8), les deux rabats 6 servant à obturer la bouche précitée, et donc clore le volume intérieur de la boite ;
d) on ménage sur les deux rabats 6 des moyens 9 de liaison entre eux, assurant une fermeture de cette boîte ; préférentiellement, ces moyens de liaison 9 consistent en une simple ligne ou bande de thermo-soudure des rabats 6.

Préférentiellement, comme montré par les figures 1 à 3, l'étape (b) de moulage est effectuée par extrusion-soufflage, moyennant quoi le corps creux 4 obtenu comprend un col 26 ou queue de soufflage; et la reprise ou façonnage du corps creux 4 comprend notamment la coupure ou élimination du col 26.

Cette extrusion-soufflage comporte, de manière traditionnelle :
- selon la figure 1, la formation par extrusion du matériau thermo-plastique, d'une paraison, les deux empreintes d'un moule étant écartées ;
- selon la figure 2, la fermeture du moule, l'extrusion étant arrêtée ;
- et selon la figure 3, le soufflage avec étirage de la paraison, à l'encontre des parois du moule, pour obtenir le corps creux 4.

L'extrusion-soufflage peut être remplacée par une injection-soufflage.

Comme le montre en particulier la figure 4, à l'issue de l'étape (b) le corps creux 4 a pour l'essentiel une forme parallélépipédique, surmontée par une partie supérieure 24 de forme polyédrique. Cette forme parallélépipédique consiste en deux flancs latéraux 22 séparés par deux flancs longitudinaux 23, reliés entre eux par des plis 27, et par un fond 21 relié aux flancs précités par des plis 29 et 30. La partie supérieure 24 polyédrique incorpore ou intègre les deux rabats 6, liés entre eux par un pli supérieur, et séparés par deux parties ou pièces 25 de forme triangulaire. Deux plis 28 et 48 séparent la partie supérieure polyédrique 24 du reste parallélépipédique de la boîte, le tout restant sous la forme du corps creux 4 monobloc.

Comme montré à la figure 5, la reprise et le façonnage du corps creux, consistent pour l'essentiel à découper et séparer au moins les deux pièces 25 triangulaires entre les deux rabats 6, puis à séparer ces rabats, par découpe d'une bande 31, au niveau du pli supérieur entre lesdits rabats, moyennant quoi, en même temps le col 26, ou queue de soufflage, se trouve éliminé du corps creux 4.

Conformément à la figure 6, on obtient alors un emballage thermo-plastique monobloc, en forme de boîte prête à l'emploi.

Différents moyens de liaison 9 entre les rabats 6 peuvent être envisagés. Comme dit précédemment, préférentiellement, il s'agit de deux zones 9 en vis-à-vis, appartenant aux deux rabats 6 respectivement susceptibles d'être thermo-soudées entre elles.

Mais, comme montré plus particulièrement à la figure 9, ces moyens de liaison 9 peuvent consister en des pions 91, coopérant avec des alvéoles 92, obtenus par thermo-formage sur les deux rabats 6 lors de l'étape (b) de moulage du -matériau thermo-plastique.

Comme montré à la figure 7, si nécessaire, on reprend et façonne le corps creux 4 obtenu, en découpant et perforant les deux rabats 6 en vis-à-vis, par exemple de manière adjacente à leur zone de liaison 9, pour obtenir un ou plusieurs orifices 10 traversant les deux rabats liés l'un à l'autre, de part en part. Ces orifices 10 servent, par exemple à la suspension de l'ensemble représenté à la figure 8.

Un emballage en forme de boîte tel que montré à la figure 6, peut être mis en oeuvre de manière traditionnelle :
- en introduisant un objet 7 et un carton 8, par la bouche 5 ouverte de l'emballage ;
- et en appliquant et liant 9 les deux rabats l'un contre l'autre.

On obtient ainsi un ensemble tel que représenté à la figure 8, c'est-à-dire comprenant, d'une part un emballage tel que précédemment décrit, dont les deux rabats 6 sont appliqués et liés contre l'autre avec fermeture de la boîte, et d'autre part un objet 7 contenu et enfermé à l'intérieur de cette boîte.

Bien entendu, la paroi et/ou le matériau thermo-plastique peuvent être adaptés en fonction de l'utilisation et/ou des fonctions de l'emballage. En particulier, il peut s'agir de tout matériau ou paroi thermo-plastique, isolant thermiquement, ou adapté à un contact alimentaire par exemple.

## Revendications

1. Procédé d'obtention d'un emballage thermo-plastique (1) en forme de boîte avec une bouche transversale (5) bordée par des rabats (6) donnant à sa partie supérieure une forme générale polyédrique, procédé selon lequel :
(a) on dispose d'un matériau thermo-plastique, apte à former une feuille ;
(b) à partir dudit matériau thermo-plastique, à l'état fluide, on forme par moulage-soufflage un corps creux (4) dans la paroi (2) duquel sont formés d'un seul tenant, d'une part, plusieurs flancs (22, 23) et un fond (21), déterminant ensemble un volume en forme de boîte et, d'autre part, une partie supérieure (24) à l'opposé du fond (21), moyennant quoi, après solidification du matériau thermo-plastique, on obtient ladite boîte monobloc comportant ladite bouche (5) pour l'introduction d'un objet (7) ;
**caractérisé en ce que** la paroi (2), dans laquelle sont formés de manière monobloc, et la boîte et la partie supérieure, est de faible épaisseur, par exemple de 0,4 mm, pour être à la fois suffisamment souple pour être déformée, sans contrainte importante, et suffisamment rigide pour résister à des chocs, par exemple de manipulation,
tandis que le corps creux formé pendant l'étape b) de moulage-soufflage comporte une partie supérieure polyédrique (24) qui obture la bouche (5) de la boite et comprend deux rabats opposés (6) et deux pièces triangulaires (25) de liaison de ces rabats et, éventuellement, la queue de soufflage (26), les deux rabats (6) et les pièces (25) étant reliés à la paroi de la boite par des lignes de pliage (28,48), alors que les deux rabats (6) sont reliés entre eux par une ligne de pliage supérieure,
et que cette étape h) est suivie, par une étape de façonnage du corps creux au cours de laquelle les deux rabats (6) sont, fonnés dans la partie supérieure polyèdrique (24) d'une part, par réalisation, au niveau de leur pli supérieur, d'une bande découpée (31), comprenant la queue de soufflage (26) si elle est présente, et, d'autre part, séparés des pièces triangulaires (25) par découpe de ces pièces entraînant leur séparation du corps creux.

2. Procédé selon la revendication 1, **caractérisé en ce que** pendant l'étape de façonnage, on ménage sur les deux rabats (6) des moyens de liaison entre eux, assurant une fermeture de la hoite.

3. Procédé selon la revendication 2, **caractérisé en ce que** les moyens de liaison (9) consistent en une simple ligne ou bande de thermo-soudure des rabats (6).

4. Procédé selon la revendication 1, **caractérisé en ce que** les pendant l'étape (b) de moulage-soufflage on fome sur les deux rabats (6) des moyens de liaison (9) consistant en des pions (91) coopérant avec des alvéoles (92).

5. Procédé selon la revendication 1, **caractérisé en ce que**, pendant l'étape de façonnage, on découpe et perfore les deux rabats (6) en vis-à-vis, par exemple de manière adjacente à leur zone de liaison (9), avec au moins un orifice (10) les traversant ensemble de part en part.

## Patentansprüche

1. Verfahren zur Herstellung einer thermoplastischen Verpackung (1) in Form einer Schachtel mit einer querverlaufenden Öffnung (5), die von Klappen (6) eingefasst ist, welche ihrem oberen Abschnitt eine allgemeine, polyedrische Form geben, bei welchem Verfahren:
(a) ein thermoplastisches Material verwendet wird, das geeignet ist, eine Folie zu bilden;
(b) aus dem thermoplastischem Material durch Formen/Aufblasen im Flüssigzustand ein Hohlkörper (4) in der Wand (2) gebildet wird, aus welchem in einem Zug einerseits mehrere Seiten (22, 23) und ein Boden (21) gebildet werden, welche zusammen einen schachtelförmigen Raum begrenzen, und andererseits ein dem Boden (21) gegenüberliegender oberer Abschnitt (24), wodurch man nach Festwerden des thermoplastischen Materials die einstückige Schachtel erhält, welche die Öffnung (5) zum Einführen eines Gegenstands (7) umfasst;
**dadurch gekennzeichnet, dass** die Wand, in der auf einstückige Weise sowohl die Schachtel als auch der obere Abschnitt ausgebildet sind, eine geringe Dicke hat, zum Beispiel 0,4 mm, damit sie ohne große Spannung ausreichend elastisch zum Verformen ist und gleichzeitig ausreichend steif ist, Stößen standzuhalten, zum Beispiel im Zuge der Handhabung, während der Hohlkörper, der bei Schritt b) durch Formen/Aufblasen gebildet wurde, einen oberen polyedrischen Abschnitt (24) umfasst, der die Öffnung (5) der Schachtel verschließt und zwei gegenüberliegende Klappen (6) und zwei dreieckige Teile (25) zum Verbinden dieser Klappen und möglicherweise den Blasaufsatz (26) umfasst, wobei die zwei Klappen (6) und die Teile (25) durch Falzlinien (28, 48) mit der Wand der Schachtel verbunden sind, während die zwei Klappen (6) durch eine obere Falzlinie miteinander verbunden sind,
und dass auf diesen Schritt b) ein Schritt zum Weiterverarbeiten des Hohikörpers folgt, bei welchem die zwei Klappen (6) einerseits im oberen polyedrischen Abschnitt (24) ausgebildet werden, indem in Höhe ihres oberen Falzes ein Streifen (31) abgeschnitten wird, welcher Streifen den Blasaufsatz (26) umfasst, wenn er vorhanden ist, und bei welchem die zwei Klappen (6) andererseits durch Abschneiden der dreieckigen Teile (25) von diesen Teilen getrennt werden, wodurch sie vom Hohlkörper abgetrennt werden.

2. Verfahren nach Anspruch 1,
**dadurch gekennzeichnet, dass** während des Weiterverarbeitungsschritts auf den zwei Klappen (6) Mittel zum Verbinden derselben angebracht werden, die das Schließen der Schachtel gewährleisten.

3. Verfahren nach Anspruch 2,
**dadurch gekennzeichnet, dass** die Verbindungsmittel (9) aus einer einfachen Linie oder einem Streifen zum Thermo-Schweißen der Klappen (6) bestehen.

4. Verfahren nach Anspruch 1,
**dadurch gekennzeichnet, dass** beim Formen/Aufblasen-Schritt (b) auf den zwei Klappen (6) Verbindungsmittel (9) gebildet werden, die aus mit Rastvertiefungen (92, alvéoles) zusammenwirkenden Rastvorsprüngen (91, pions) bestehen.

5. Verfahren nach Anspruch 1,
**dadurch gekennzeichnet, dass** während des Weiterverarbeitungsschritts die zwei gegenüberliegenden Klappen (6) abgeschnitten und perforiert werden, zum Beipiel ihrem Verbindungsbereich benachbart (9), wobei mindestens ein Loch (10) sie zusammen durchsetzt.

## Claims

1. A method of obtaining a thermoplastic packaging (1) in the form of a box, having a transverse mouth (5) bordered by flaps (6) giving its upper part a generally polyhedral shape, the method being as follows:
(a) a thermoplastic material suitable for forming a sheet is used;
(b) from the said thermoplastic material in the fluid state there is formed by blow moulding a hollow body (4), in the wall (2) whereof there are formed in one piece on the one hand a plurality of side faces (22, 23) and a base (21) which together define a volume in the form of a box and on the other hand an upper part (24) opposite the base (21), by means of which, once the thermoplastic material has set, there is obtained the said single-piece box having the said mouth (5) for an object (7) to be introduced;
**characterised in that** the wall (2) in which there are formed in a single piece both the box and the upper part is thin, for example 0.4 mm thick, so that it is both sufficiently flexible to be deformed without undergoing major stress and sufficiently rigid to resist impacts, for example from handling,
whereas the hollow body formed during the blow moulding in step b) has a polyhedral upper part (24) which closes off the mouth (5) of the box and comprises two opposing flaps (6) and two triangular pieces (25) for connecting these flaps and, where appropriate, the moulding sprue (26), the two flaps (6) and the pieces (25) being connected to the wall of the box by fold lines (28, 48), while the two flaps (6) are connected to one another by an upper fold line,
and **in that** this step b) is followed by a step of shaping the hollow body, in the course of which the two flaps (6) are on the one hand formed in the polyhedral upper part (24) by making at their upper fold a cut-out strip (31), comprising the moulding sprue (26) if this is present, and are on the other hand separated from the triangular pieces (25) by cutting these pieces out, resulting in the separation thereof from the hollow body.

2. A method according to Claim 1, **characterised in that** during the shaping step there are made on the two flaps (6) means for connecting them to one another, ensuring closure of the box.

3. A method according to Claim 2, **characterised in that** the means (9) for connection consist of a simple line or strip for heat-sealing the flaps (6).

4. A method according to Claim 1, **characterised in that** during the blow moulding step (b) there are formed on the two flaps (6) means (9) for connection consisting of lugs (91) which cooperate with receiving cells (92).

5. A method according to Claim 1, **characterised in that** during the shaping step the two flaps (6) are cut out and perforated at points opposite one another, for example adjacent to their connection zone (9), with at least one opening (10) passing through them from one side to the other.
